# FASCICULE DE BREVET EUROPEEN

(11) **EP 4 232 724 B1**
(45) Date de publication et mention de la délivrance du brevet: **22.05.2024**
(21) Numéro de dépôt: 21789879.0
(22) Date de dépôt: 15.10.2021
(51) Int. Cl.: F16C 7/06, F16C 7/02

(54) **BIELLE À LATTES CINTRÉES**
PLEUEL MIT GEBOGENEN SEITENTEILE
CONNECTION ROD WITH CURVED SIDE PORTIONS

(30) Priorité: 23.10.2020 FR 2010889
(43) Date de publication de la demande: 30.08.2023
(73) Titulaire: HUTCHINSON, 75008 Paris (FR)
(72) Inventeur: ERTEM, Engin, 45200 Amilly (FR); JOSEPH, Vincent, 45200 Montargis (FR); RIETSCH, Jean-Christophe, 91100 Corbeil-Essonnes (FR); BUCHIN, Jean-Michel, 39000 Lons-Le-Saunier (FR)
(74) Mandataire: Gevers & Orès
(86) Numéro de dépôt international: PCT/IB2021/059516
(87) Numéro de publication internationale: WO 2022/084816

(56) Documents cités:
- WO-A1-2010/133601

## Description

L'invention a trait à des bielles, composants mécaniques élémentaires conçus pour transmettre des efforts et des mouvements et susceptible d'être soumis à des contraintes très variées et parfois importantes, selon les fonctions spécifiques qu'elles assument.

Les bielles sont notamment un composant mécanique de base dans l'industrie aéronautique, où elles sont utilisées comme brique élémentaire dans de très nombreux systèmes dans lesquels elles doivent évidemment faire preuve d'une fiabilité élevée. Elles sont ainsi utilisées dans des commandes de vol, linéaires ou rotatives, et dans de nombreux mécanismes de contrôle, elles peuvent par ailleurs avoir une fonction de support ou une fonction dans l'élaboration de structure primaires de l'avion etc. Elles sont souvent distinguées selon qu'elles sont utilisées dans la transmission de mouvements ou d'efforts, et peuvent être conçues pour être de longueur fixe ou de longueur réglable, dans ce dernier cas via des mécanismes qui les rendent télescopiques et par conséquent plus adaptables à des environnements techniques diversifiés. Le document WO 2010/133601 A1 montre une bielle suivant le préambule de la revendication 1.

Les bielles mécaniques télescopiques, c'est-à-dire à entraxe-axe variable et réglable, sont en particulier utilisées lorsqu'il s'agit de transmettre un mouvement, par exemple dans un système de commande de vol. En général, le réglage en longueur est obtenu par une combinaison de filetage droite et gauche, parfois associé à un dispositif de freinage micrométrique. Des embouts filetés sont en général utilisés pour être montés sur les corps des bielles.

Les bielles actuelles, à entre-axe fixe ou réglable, sont généralement métalliques ou fabriquées à partir de matériaux composites. L'utilisation de matériaux composites, offrant une plus grande rigidité, est par exemple préférée pour des bielles de grande longueur. Il en va de même lorsque l'environnement structurel est lui-même en matériau composite, ce qui permet notamment d'éviter que se produise, dans les différents composants, des problèmes de dilatation linéaire différentielle.

Les enjeux énergétiques qui sont très généralement posés de nos jours, et qui s'appliquent de manière particulièrement aigüe dans l'industrie aéronautique, conduisent les constructeurs à vouloir privilégier les composants légers, et par conséquent les bielles composites. Or, les bielles classiques de longueur réglable, nécessitant une structure filetée classique dans le corps de la bielle et des embouts filetés, ne sont en général pas fabriquées en matériau composite et sont un facteur de poids.

Parallèlement, les enjeux économiques sont particulièrement primordiaux actuellement dans l'industrie aéronautique, à l'heure d'un monde qui voit l'émergence de questions environnementales. Les bielles à embouts vissés sont coûteuses à produire et elles impliquent des délais de réalisation longs qui augmentent indirectement la charge économique globale.

Plus économiques à fabriquer, les bielles à entre-axe fixe présentent dans la plupart des cas des corps tubulaires à symétrie de révolution, sauf aux extrémités ou les sections deviennent rectangulaires. Le passage d'une section tubulaire à une section rectangulaire complique la conception et la réalisation des pièces, notamment lorsqu'elles sont fabriquées en matériaux composites.

De nos jours, pour toutes ces raisons, les constructeurs - notamment mais plus particulièrement dans le domaine de l'aéronautique - cherchent à optimiser les coûts et les masses de ces pièces. Les impacts économiques attendus sur les avions sont directs, par la baisse du coût des bielles, et indirects par l'allègement qui conduit à une baisse des coûts d'exploitation.

L'invention propose ainsi une alternative de conception et de fabrication particulièrement adaptée notamment mais non exclusivement aux bielles de longueur réglable, via une solution technique économique à la production et qui se décline elle-même en de multiples variantes faciles à mettre en oeuvre. Les avantages de l'invention sont en particulier notables pour des configurations réglables, les variations de longueur étant particulièrement faciles à réaliser dans les variantes qui prévoient un tel réglage.

Ainsi, selon l'invention, la bielle comporte deux lattes flexibles élastiquement, cintrées et agencées symétriquement par rapport à un axe longitudinal de la bielle, lesdites lattes présentant des zones d'extrémités d'allure parallèle audit axe. Elle comporte au surplus des moyens d'écartement transversal placés entre les lattes et des moyens de solidarisation des lattes entre elles et aux moyens d'écartement transversal. La bielle de l'invention est telle que les moyens de solidarisation comportent des moyens de réglage du cintrage des lattes en vue de faire varier la longueur axiale de la bielle.

On agit donc sur la longueur de la bielle en agissant sur les moyens de solidarisation qui confèrent sa cohérence mécanique à la bielle. Ceux-ci sont ajustables notamment dans une direction transversale, puisque permettant notamment de modifier le cintrage des lattes, conduisant mécaniquement à faire varier la longueur des lattes. Le réglage dans le sens du serrage fait augmenter la longueur de la bielle, et le desserrage aboutit au contraire à revenir élastiquement à un cintrage initial et à diminuer la longueur de la bielle. En d'autres termes, on agit sur les moyens de réglage des moyens de solidarisation permettant d'assembler les composants de la bielle pour modifier la longueur axiale de ladite bielle.

De préférence, les moyens de réglage comportent des moyens de verrouillage, qui permettent de pérenniser le réglage désiré, obtenu en agissant sur les moyens de réglage des moyens de solidarisation.

Pour qu'un réglage en longueur soit possible, dans certaines configurations de bielles au moins, au moins une partie des moyens d'écartement doit être déformable élastiquement ou réversiblement au moins dans une direction normale à l'axe longitudinal de la bielle. A contrario, si les moyens d'écartement ne sont pas déformables, aucun réglage de longueur ne peut être mis en oeuvre.

Selon une première configuration possible, les moyens d'écartement transversal peuvent être constitués d'un noyau intérieur présentant une structure dont les faces en regard des lattes épousent au moins partiellement la surface de la face interne des lattes. La correspondance des surfaces, dans cette configuration à noyau, améliore les possibilités de réglage puisque les déformations des lattes se transmettent de manière continue sur l'ensemble de la structure du noyau intérieur, et vice-versa.

De préférence, la structure du noyau intérieur peut-être constituée d'au moins une traverse médiane et de deux écarteurs transversaux au niveau des zones d'extrémité des lattes, chaque traverse et les écarteurs d'extrémité étant reliés par des longerons de même profil longitudinal que la face intérieure des lattes. Dans cette configuration, les traverses ne sont pas fixées aux lattes sur la totalité - ou au moins sur la plus grande partie - de leur longueur, et un glissement relatif entre le noyau et les lattes peut donc se produire.

Il est à noter que les écarteurs d'extrémité peuvent être rigides, et qu'ils préservent un espace libre entre les zones d'extrémité des lattes. L'espace situé entre lesdites zones d'extrémité, à chaque bout de la bielle, ne doit pas forcément être impacté par la réduction d'épaisseur transversale lors d'une opération d'augmentation de la longueur de la bielle.

Alternativement, la structure du noyau intérieur peut être pleine, et comporter des faces externes au contact et épousant la face interne des lattes, et présentant une épaisseur transversale à ses extrémités préservant un espace libre entre les zones d'extrémité des lattes. Bien que la structure du noyau soit ici compacte et unitaire, rien n'empêche de prévoir qu'il soit réalisé en un matériau déformable et que les moyens de fixation le déforment au moins dans une portion médiane de la bielle. La déformation au niveau des zones d'extrémité peut le cas échéant être mise en oeuvre indépendamment, voire pas du tout si l'on veut préserver un espace d'extrémité entre les lattes. Le même glissement des faces externes du noyau plein au contact des faces internes des lattes est possible au moins dans une large portion centrale de la bielle.

Selon encore une autre configuration, la structure du noyau intérieur peut-être constituée de deux blocs écarteurs rigides situés au voisinage des deux zones d'extrémité et qui préservent un espace libre entre lesdites zones d'extrémité. Les moyens de solidarisation, alors plutôt localisés dans la portion médiane, n'ont qu'une influence sur la modification du cintrage des lattes, conduisant bien à une variation de longueur de la bielle.

Les moyens de solidarisation eux-mêmes peuvent prendre diverses configurations, selon l'invention. Ainsi, dans une première variante, lesdits moyens de solidarisation peuvent par exemple consister en au moins un enroulement de fil composite autour des lattes, dans une pluralité de directions faisant un angle compris entre 35° et 90° avec l'axe longitudinal. Le serrage visant à augmenter la longueur des bielles s'effectue alors en travaillant sur la tension des enroulements

Selon une autre variante possible, les moyens de solidarisation consistent en au moins un cerclage métallique entourant l'extérieur des lattes. La logique d'allongement/réduction de longueur obéit alors au même principe, à savoir un serrage plus ou moins important.

Enfin, les moyens de solidarisation peuvent aussi consister en des boulons placés au moins au centre des lattes et au voisinage des zones d'extrémité des lattes. Des vis et des écrous sont ainsi placés judicieusement sur et le long de la bielle, de manière à permettre de gérer la variation de longueur des bielles en fonction de l'existence et de la position des moyens d'écartement, et de leur déformabilité. Il est à noter que dans cette configuration, les moyens de solidarisation sont identifiés aux moyens d'écartement, au moins dans la portion centrale de la bielle, et que leur déformabilité transversale est bien réversible. La déformation résulte en effet du serrage/desserrage appliqué au boulon.

De tels systèmes de vis-écrous sont adaptés à la géométrie des lattes, et peuvent être combinées avec de l'élastomère si une fonction d'atténuation de vibrations doit être implémentée.

Pour pérenniser le réglage obtenu, au moins le ou les boulons placés au centre des lattes peuvent être équipés d'écrous de verrouillage.

Selon le contexte d'utilisation, et la nécessité ou non de mise en place de la fonction de variabilité de la longueur des bielles, les lattes peuvent par exemple être réalisées en l'un des matériaux suivants : matériau composite tel que polymère renforcé de fibres de carbone, polymère renforcé de fibres de verre, métal tel que l'aluminium ou l'acier.

De même, le noyau intérieur peut, de manière non limitative, être réalisée en l'un des matériaux suivants : mousse de polymère dont mousse de polyuréthane et mousse de polyuréthane thermoplastique, plastique injecté, plastique en impression 3D, élastomère, mélange à mouler en feuille, mélange de résine thermodurcissable, nid d'abeille en métal ou en matériau composite ou en plastique, métal, bois.

D'autres caractéristiques et avantages de l'invention ressortiront de la description détaillée qui va suivre, qui se rapporte à des exemples particuliers de réalisation d'une bielle selon l'invention, exemples qui ne doivent cependant pas être considérés comme limitatifs de l'invention, qui est définie dans les revendications jointes.

La compréhension de cette description sera notamment facilitée en se référant aux figures suivantes :
La figure 1 est une vue en élévation d'une bielle selon une première variante de la présente invention ;
La figure 2 représente, en vue perspective, cette bielle assemblée ;
La figure 3 montre une vue perspective éclatée de la bielle de la figure 2 ;
La figure 4 représente, en vue en élévation, une seconde variante de bielle selon l'invention ;
La figure 5 montre, en vue perspective, la variante de la figure 4 ;
La figure 6 l'illustre en vue en perspective éclatée ;
La figure 7 représente, en vue en élévation, un mode d'assemblage avec des premiers moyens de fixation à enroulement(s) de fil composite ;
La figure 8 montre en vue perspective la configuration de la figure 7 ;
La figure 9 illustre, sur une vue en élévation, un autre mode de fixation, avec des cerclages ;
La figure 10 reprend la configuration de la figure précédente, en vue perspective ;
La figure 11 représente, en vue en élévation, une troisième variante de bielle selon l'invention ;
La figure 12 montre la version de la figure 11 en vue perspective ; et
La figure 13 illustre la variation de longueur d'une bielle selon l'invention en fonction du réglage des moyens de fixation.

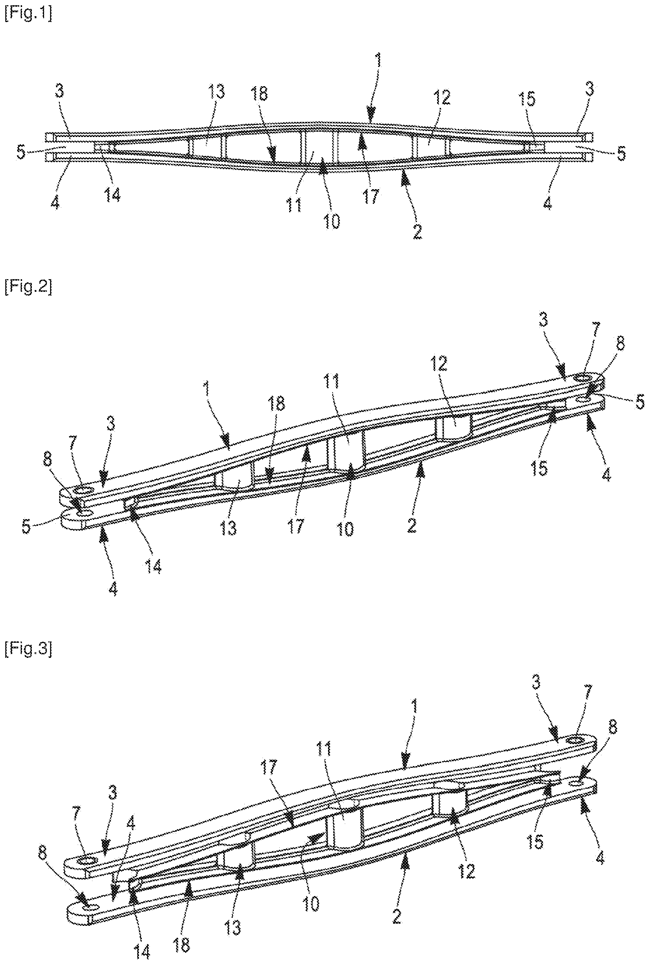

En référence aux figures 1 à 3, la bielle de l'invention est constituée de deux lattes 1, 2 cintrées vers l'extérieur qui présentent des zones d'extrémité 3, 4 d'allure parallèle ménageant entre elles un espace 5 à la manière d'une chape. Les lattes 1, 2 sont disposées symétriquement au moins par rapport à un plan médian passant entre les lattes 1, 2, voire par rapport à un axe longitudinal de la bielle. Ces zones d'extrémité 3, 4 sont en l'occurrence munies d'orifices 7, 8 que la symétrie précitée rend coaxiaux et qui permettent la mise en oeuvre d'une liaison rotative, le cas échéant avec d'autres éléments de type bielle.

Dans la première variante de la figure 1, le noyau intérieur 10, particulièrement visible en figure 3, présente une structure avec des traverses 11, 12 et 13 et des écarteurs d'extrémité 14, 15 reliés par deux traverses 17, 18 dont le profil externe épouse celui des portions des faces internes des lattes 1, 2 avec lequel ils sont en contact. Dans la configuration montrée, les traverses 17, 18 sont symétriques par rapport à un plan médian normal au plan précédemment mentionné, passant la ligne longitudinale médiane de chaque latte 1, 2. Les écarteurs d'extrémité 14, 15 se situent en bordure des espaces 5 délimités par les zones d'extrémité 3, 4 des lattes 1, 2.

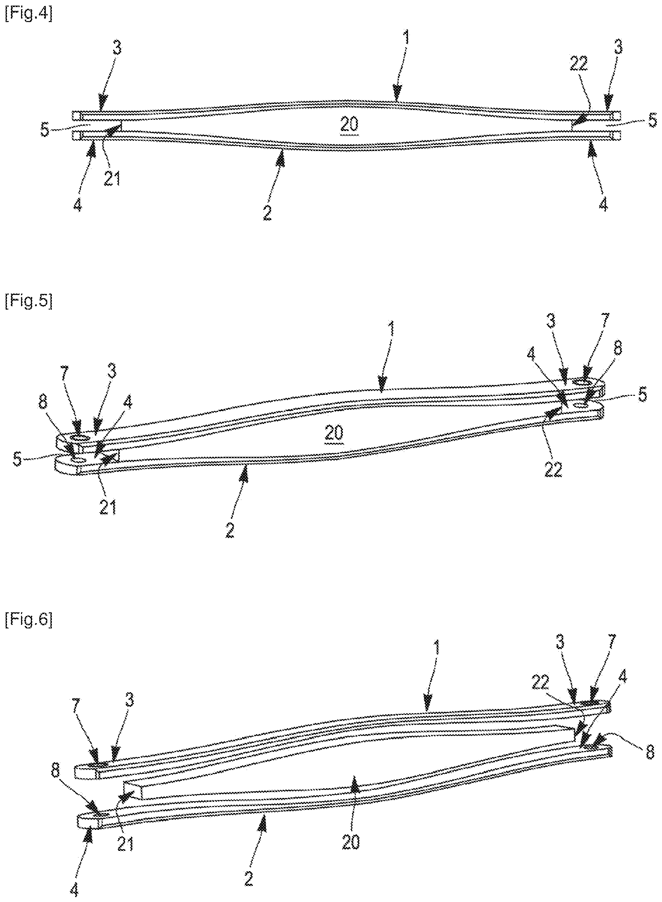

La variante des figures 4 à 6 est identique pour ce qui concerne les lattes et leur disposition relative, la seule différence résidant dans le noyau intérieur 20, qui est plein comme cela est plus particulièrement montré en figure 6. Les deux extrémités libres 21, 22 de ce noyau plein 20 ont une épaisseur/dimension transversale qui préserve l'espace 5.

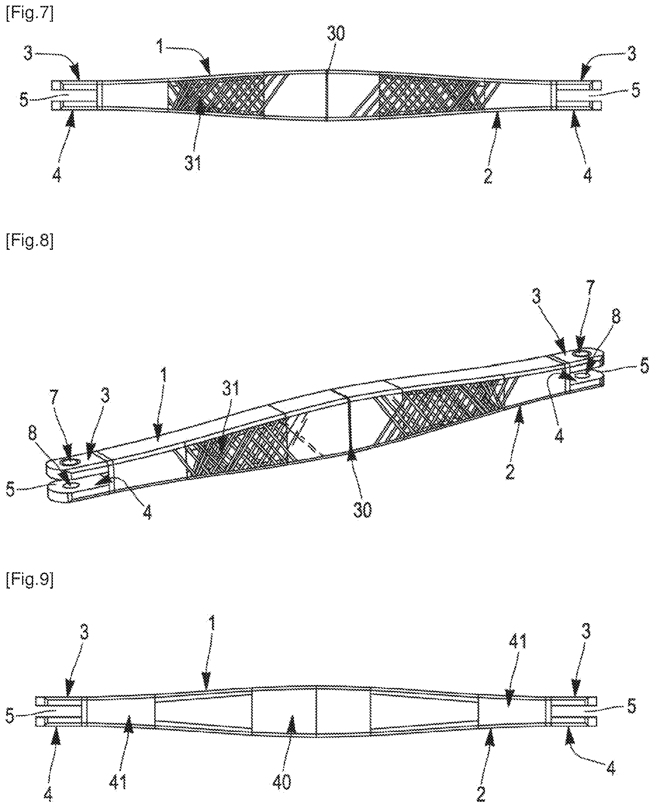

Les figures 7 et 8 ne préjugent pas de la nature et de la configuration du noyau intérieur de la bielle, et montrent l'aspect du ou des enroulement(s) de fil composite qui forme(nt) les moyens de solidarisation des lattes entre elles et à la structure du noyau intérieur. Dans une partie centrale de la bielle, les fils 30 sont orientés dans une direction perpendiculaire à l'axe longitudinal de la bielle, alors que lorsqu'on se rapproche des zones d'extrémité, les fils 31 présentent des angles compris entre 35° et 90°. Les angles bornant cet intervalle peuvent le cas échéant être respectivement inférieurs et supérieurs, mais ceux qui sont mentionnés sont considérés comme préférentiels.

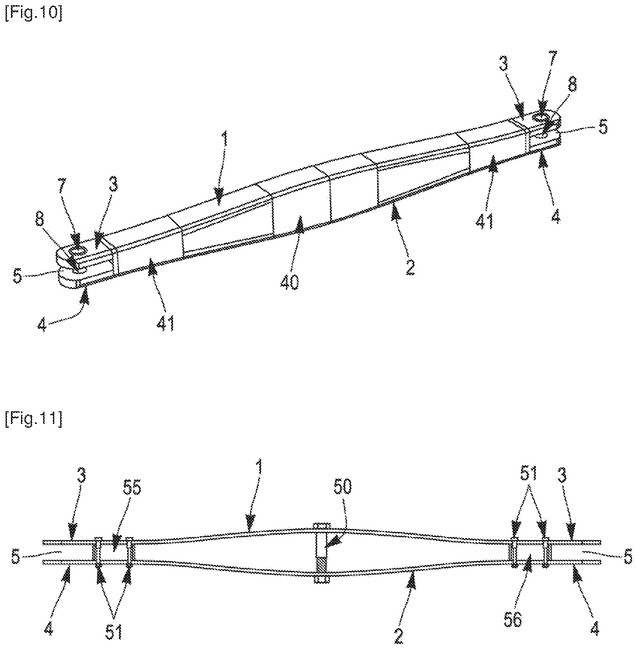

Les moyens de solidarisation représentés en figures 9 et 10 sont constitués de cerclages, métalliques ou en composite, à la manière des tonneaux. Des cerclages 41 sont à nouveau disposés en bordure des zones d'extrémité 3, 4, complétant des cerclages 40 d'allure plus centrale.

Dans les deux hypothèses de moyens de solidarisation décrits ci-dessus, la possibilité d'un réglage de la longueur de la bielle dépend de la nature du ou des matériaux constituant le noyau intérieur. S'il est déformable au moins dans la direction transversale, la longueur peut varier selon le degré de serrage des fils enroulés ou des cerclages.

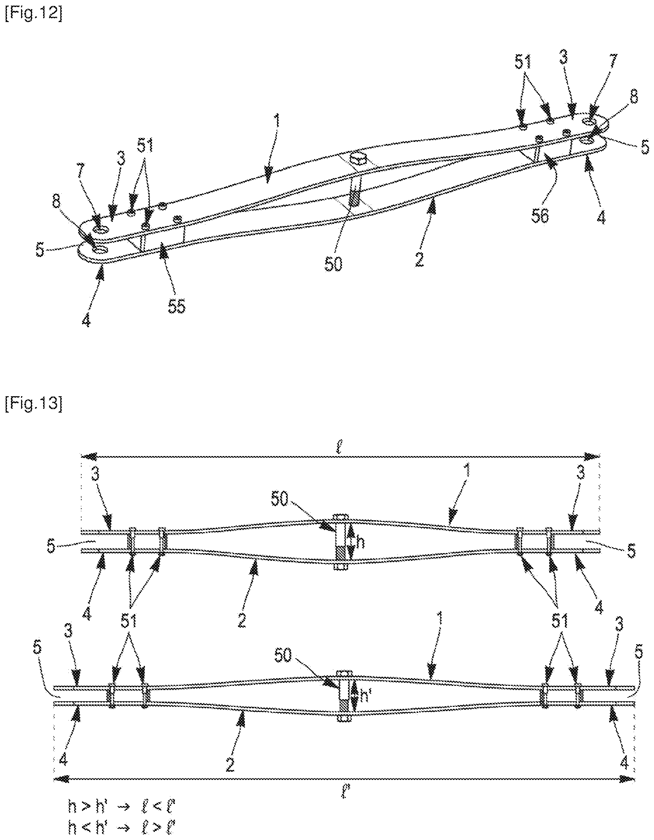

Il en va de même pour la solidarisation par boulonnage représentée aux figures 11 et 12, qui peut permettre un serrage/desserrage transversal au moyen du boulon 50 (alternativement, il peut y avoir plusieurs boulons, en une ou plusieurs rangées, ou des équivalents techniques aux boulons). Il est à noter que, dans la variante représentée, le noyau intérieur est double 55, 56 et ne comporte pas d'élément central, qui n'est techniquement pas toujours nécessaire, selon le contexte et les contraintes mécaniques d'utilisation. Il n'est donc pas unitaire, contrairement aux configurations précédentes. La structure de ce noyau comporte des blocs d'extrémité 55, 56 qui sont également boulonnées par des vis/écrous 51 de plus petite dimension, qui les fixent toujours en bordure des espaces 5. Ces blocs 55, 56 sont dans la plupart des cas rigides, les réglages de longueur ayant une amplitude bien plus limitée à ces emplacements de la bielle. Une fixation par exemple par 4 boulons (le nombre de boulons utilisés peut être plus ou moins élevé) n'est au surplus guère pratique pour mettre en oeuvre un tel réglage.

La figure 13 a pour objet de représenter de manière explicite le réglage de longueur d'une bielle que permet l'invention. Ainsi, avec les moyens de solidarisation et la configuration des figures 11 et 12, il suffit de serrer le boulon 50 pour allonger la bielle. La longueur h entre lattes du boulon 50 diminue et devient h', h'< h. Comme on le voit sur la figure, la longueur l' de la bielle après serrage est alors plus grande que la longueur initiale l : l'> I. L'opération inverse de desserrage du boulon 50 conduit au résultat inverse. Comme mentionné, une telle configuration aboutit à confondre les moyens de solidarisation et d'écartement, au moins au centre de la bielle, et ce sont donc ces moyens unifiés qui sont déformables de manière réversible dans une direction normale à l'axe longitudinal de la bielle.

L'avantage de la présente invention réside en particulier en ce qu'elle est particulièrement simple et économique à fabriquer, pour des performances mécaniques aussi voire plus élevées que dans les configurations actuelles bien plus complexes et onéreuses à produire.

Bien que l'invention ait été décrite en relation avec des formes de réalisation particulières, sous forme de variantes de réalisation, il est bien entendu qu'elle n'y est nullement limitée, les exemples n'étant pas exhaustifs des configurations possibles. On peut y apporter diverses modifications de formes et/ou de matériaux, et combiner ces divers éléments comme défini dans les revendications jointes.

Ainsi, les différents moyens de fixation des figures respectivement 7-8, 9-10 et 11-12 peuvent s'appliquer aux moyens d'écartement respectivement des figures 1-3 et 4-6, voire 11-12. Les combinaisons sont multiples et non limitatives, inclure des systèmes mécaniques comme les boulons ou chimiques comme une réticulation de mousse pour participer au verrouillage de la bielle en une longueur etc.

## Revendications

1. Bielle comportant deux lattes (1, 2) flexibles élastiquement, cintrées et agencées symétriquement par rapport à un axe longitudinal de la bielle, lesdites lattes (1, 2) présentant des zones d'extrémités (3, 4) d'allure parallèle audit axe, ainsi que des moyens d'écartement transversal placés entre les lattes (1, 2) et des moyens de solidarisation des lattes entre elles et aux moyens d'écartement transversal, **caractérisée en ce que** les moyens de solidarisation comportent des moyens de réglage du cintrage des lattes (1, 2) en vue de faire varier la longueur axiale de la bielle.

2. Bielle selon la revendication précédente, **caractérisée en ce que** les moyens de réglage comportent des moyens de verrouillage.

3. Bielle selon la revendication précédente, **caractérisée en ce qu'**au moins une partie des moyens d'écartement est déformable élastiquement ou réversiblement au moins dans une direction normale à l'axe longitudinal de la bielle.

4. Bielle selon l'une des revendications précédentes, **caractérisée en ce que** les moyens d'écartement transversal sont constitués d'un noyau intérieur (10, 20, 55, 56) présentant une structure dont les faces en regard des lattes (1, 2) épousent au moins partiellement la surface de la face interne des lattes (1, 2).

5. Bielle selon la revendication précédente, **caractérisée en ce que** la structure du noyau intérieur (10) est constituée d'au moins une traverse médiane (11, 12, 13) et de deux écarteurs transversaux (14, 15) au niveau des zones d'extrémité (3, 4) des lattes (1, 2), chaque traverse (11, 12, 13) et les écarteurs d'extrémité (14, 15) étant reliés par des longerons (17, 18) de même profil longitudinal que la face intérieure des lattes (1, 2).

6. Bielle selon la revendication précédente, **caractérisée en ce que** les écarteurs d'extrémité (14, 15) sont rigides et préservent un espace libre (5) entre les zones d'extrémité (3, 4) des lattes (1, 2).

7. Bielle selon la revendication 4, **caractérisée en ce que** la structure du noyau intérieur (20) est pleine et comporte des faces externes au contact et épousant la face interne des lattes (1, 2), et présentant une épaisseur transversale à ses extrémités (21, 22) préservant un espace libre (5) entre les zones d'extrémité (3, 4) des lattes (1,2).

8. Bielle selon la revendication 4, **caractérisée en ce que** la structure du noyau intérieur est constituée de deux blocs écarteurs (55, 56) rigides situés au voisinage des deux zones d'extrémité (3, 4) et préservant un espace libre (5) entre lesdites zones d'extrémité (3, 4).

9. Bielle selon l'une quelconque des revendications précédentes, **caractérisée en ce que** les moyens de solidarisation consistent en au moins un enroulement de fil (30, 31) composite autour des lattes (1, 2), dans une pluralité de directions faisant un angle compris entre 35° et 90° avec l'axe longitudinal.

10. Bielle selon l'une quelconque des revendications précédentes, **caractérisée en ce que** les moyens de solidarisation consistent en au moins un cerclage métallique (40, 41) entourant l'extérieur des lattes (1, 2).

11. Bielle selon l'une quelconque des revendications précédentes, **caractérisée en ce que** les moyens de solidarisation consistent en des boulons (50, 51) placés au moins au centre des lattes (1, 2) et au voisinage des zones d'extrémité (3, 4) des lattes (1, 2).

12. Bielle selon la revendication précédente, **caractérisée en ce qu'**au moins le ou les boulons (50) placés au centre des lattes (1, 2) sont équipés d'écrous de verrouillage.

13. Bielle selon l'une quelconque des revendications précédentes, **caractérisée en ce que** les lattes (1, 2) sont réalisées en l'un des matériaux suivants : matériau composite tel que polymère renforcé de fibres de carbone, polymère renforcé de fibres de verre, métal tel que l'aluminium ou l'acier.

14. Bielle selon la revendication 4, **caractérisée en ce que** le noyau intérieur (10, 20, 55, 56) est réalisée en l'un des matériaux suivants : mousse de polymère dont mousse de polyuréthane et mousse de polyuréthane thermoplastique, plastique injecté, plastique en impression 3D, élastomère, mélange à mouler en feuille, mélange de résine thermodurcissable, nid d'abeille en métal ou en matériau composite ou en plastique, métal, bois.

## Patentansprüche

1. Pleuel, umfassend zwei elastisch biegbare, gebogene und in Bezug auf eine Längsachse des Pleuels symmetrisch angeordnete Latten (1, 2), wobei die Latten (1, 2) parallel zur Achse verlaufende Endbereiche (3, 4) sowie zwischen den Latten (1, 2) platzierte Mittel der transversalen Abstandhaltung und Befestigungsmittel der Latten aneinander und an den Mitteln der transversalen Abstandhaltung aufweisen, **dadurch gekennzeichnet, dass** die Befestigungsmittel Biegungsregulierungsmittel der Latten (1, 2) zum Variieren der axialen Länge des Pleuels umfassen.

2. Pleuel nach dem vorstehenden Anspruch, **dadurch gekennzeichnet, dass** die Regulierungsmittel Verriegelungsmittel umfassen.

3. Pleuel nach dem vorstehenden Anspruch, **dadurch gekennzeichnet, dass** mindestens ein Teil der Abstandhaltungsmittel in mindestens einer zur Längsachse des Pleuels normalen Richtung elastisch oder umkehrbar verformbar ist.

4. Pleuel nach einem der vorstehenden Ansprüche, **dadurch gekennzeichnet, dass** die Mittel der transversalen Abstandhaltung aus einem Innenkern (10, 20, 55, 56) gebildet sind, der eine Struktur aufweist, deren Seiten, die den Latten (1, 2) zugewandt sind, sich mindestens an die Fläche der Innenseite der Latten (1, 2) anpassen.

5. Pleuel nach dem vorstehenden Anspruch, **dadurch gekennzeichnet, dass** die Struktur des Innenkerns (10) aus mindestens einem mittleren Querträger (11, 12, 13) und zwei transversalen Abstandhaltern (14, 15) an den Endbereichen (3, 4) der Latten (1, 2) gebildet ist, wobei jeder Querträger (11, 12, 13) und die Endabstandhalter (14, 15) durch Holme (17, 18) mit gleichem Längsprofil wie die Innenseite der Latten (1, 2) verbunden sind.

6. Pleuel nach dem vorstehenden Anspruch, **dadurch gekennzeichnet, dass** die Endabstandhalter (14, 15) steif sind und einen freien Raum (5) zwischen den Endbereichen (3, 4) der Latten (1, 2) bewahren.

7. Pleuel nach Anspruch 4, **dadurch gekennzeichnet, dass** die Struktur des Innenkerns (20) voll ist und Außenseiten im Kontakt mit der Innenseite der Latten (1, 2) und an diese angepasst umfasst, und die eine transversale Dicke an ihren Enden (21, 22) aufweisen, die einen freien Raum (5) zwischen den Endbereichen (3, 4) der Latten (1, 2) bewahrt.

8. Pleuel nach Anspruch 4, **dadurch gekennzeichnet, dass** die Struktur des Innenkerns aus zwei steifen Abstandhalterblöcken (55, 56) gebildet ist, die in der Nähe der zwei Endbereiche (3, 4) gelegen sind und einen freien Raum (5) zwischen den Endbereichen (3, 4) bewahren.

9. Pleuel nach einem der vorstehenden Ansprüche, **dadurch gekennzeichnet, dass** die Befestigungsmittel aus mindestens einer Verbundgarnaufwicklung (30, 31) um die Latten (1, 2) herum in einer Vielzahl von Richtungen bestehen, die einen Winkel zwischen 35° und 90° mit der Längsachse bilden.

10. Pleuel nach einem der vorstehenden Ansprüche, **dadurch gekennzeichnet, dass** die Befestigungsmittel aus mindestens einer metallischen Umreifung (40, 41) bestehen, die den Außenbereich der Latten (1, 2) umgibt.

11. Pleuel nach einem der vorstehenden Ansprüche, **dadurch gekennzeichnet, dass** die Befestigungsmittel aus Bolzen (50, 51) bestehen, die mindestens in der Mitte der Latten (1, 2) und in der Nähe der Endbereiche (3, 4) der Latten (1, 2) platziert sind.

12. Pleuel nach dem vorstehenden Anspruch, **dadurch gekennzeichnet, dass** mindestens der oder die in der Mitte der Latten (1, 2) platzierten Bolzen (50) mit Kontermuttern versehen sind.

13. Pleuel nach einem der vorstehenden Ansprüche, **dadurch gekennzeichnet, dass** die Latten (1, 2) aus einem der folgenden Materialien hergestellt sind: Verbundmaterial wie etwa kohlenstofffaserverstärktes Polymer, glasfaserverstärktes Polymer, Metall wie etwa Aluminium oder Stahl.

14. Pleuel nach Anspruch 4, **dadurch gekennzeichnet, dass** der Innenkern (10, 20, 55, 56) aus einem der folgenden Materialien hergestellt ist: Polymer-Schaumstoff, darunter Polyurethan-Schaumstoff und thermoplastischer Polyurethan-Schaumstoff, eingespritzter Kunststoff, Kunststoff im 3D-Druck, Elastomer, Sheet Molding Compound, Gemisch aus duroplastischem Harz, Wabenmuster aus Metall oder aus Verbundmaterial oder aus Kunststoff, Metall, Holz.

## Claims

1. A connecting rod comprising two elastically flexible slats (1, 2) which are curved and arranged symmetrically with respect to a longitudinal axis of the connecting rod, said slats (1, 2) having end zones (3, 4) running parallel to said axis, as well as transverse spacer means placed between the slats (1,2) and means for securing the slats to each other and to the transverse spacer means, **characterised in that** the securing means comprise means for adjusting the curve of the slats (1, 2) with a view to varying the axial length of the connecting rod.

2. The connecting rod according to the preceding claim, **characterised in that** the adjustment means comprise locking means.

3. The connecting rod according to the preceding claim, **characterised in that** at least part of the spacer means is elastically or reversibly deformable at least in a direction normal to the longitudinal axis of the connecting rod.

4. The connecting rod according to one of the preceding claims, **characterised in that** the transverse spacer means consist of an inner core (10, 20, 55, 56) having a structure, the faces of which facing the slats (1, 2) at least partially embrace the surface of the internal face of the slats (1, 2).

5. The connecting rod according to the preceding claim, **characterised in that** the structure of the inner core (10) consists of at least one median crossbeam (11, 12, 13) and two transverse spacers (14, 15) at the end zones (3, 4) of the slats (1, 2), each crossbeam (11, 12, 13) and the end spacers (14, 15) being connected by spars (17, 18) having the same longitudinal profile as the inner face of the slats (1, 2).

6. The connecting rod according to the preceding claim, **characterised in that** the end spacers (14, 15) are rigid and maintain a free space (5) between the end zones (3, 4) of the slats (1, 2).

7. The connecting rod according to claim 4, **characterised in that** the structure of the inner core (20) is solid and comprises external faces in contact with and embracing the internal face of the slats (1, 2), and having a transverse thickness at its ends (21, 22) preserving a free space (5) between the end zones (3, 4) of the slats (1, 2).

8. The connecting rod according to claim 4, **characterized in that** the structure of the inner core consists of two rigid spacer blocks (55, 56) located in the vicinity of the two end zones (3, 4) and preserving a free space (5) between said end zones (3, 4).

9. The connecting rod according to any one of the preceding claims, **characterised in that** the securing means consist of at least one winding of composite wire (30, 31) around the slats (1, 2), in a plurality of directions making an angle of between 35° and 90° with the longitudinal axis.

10. The connecting rod according to any one of the preceding claims, **characterised in that** the securing means consist of at least one metal strap (40, 41) surrounding the outside of the slats (1, 2).

11. The connecting rod according to any one of the preceding claims, **characterised in that** the securing means consist of bolts (50, 51) placed at least in the centre of the slats (1, 2) and in the vicinity of the end zones (3, 4) of the slats (1, 2).

12. The connecting rod according to the preceding claim, **characterised in that** at least the bolt or bolts (50) placed in the centre of the slats (1, 2) are equipped with locking nuts.

13. The connecting rod according to any one of the preceding claims, **characterised in that** the slats (1, 2) are made of one of the following materials: composite material such as carbon-fibre reinforced polymer, glass-fibre reinforced polymer, metal such as aluminium or steel.

14. The connecting rod according to claim 4, **characterised in that** the inner core (10, 20, 55, 56) is made of one of the following materials: polymer foam including polyurethane foam and thermoplastic polyurethane foam, injected plastic, 3D printed plastic, elastomer, sheet moulding mixture, thermosetting resin mixture, honeycomb made of metal or composite material or of plastic, metal, wood.
